# FASCICULE DE BREVET EUROPEEN

(11) **EP 2 533 938 B1**
(45) Date de publication et mention de la délivrance du brevet: **28.11.2018**
(21) Numéro de dépôt: 11706888.2
(22) Date de dépôt: 28.01.2011
(51) Int. Cl.: B23P 6/00, F01D 25/24

(54) **PROCÉDÉ DE RÉPARATION D'UNE BRIDE D'UN CARTER**
VERFAHREN ZUR REPARATUR EINES GEHÄUSEFLANSCHS
METHOD FOR REPAIRING A FLANGE OF A HOUSING

(30) Priorité: 10.02.2010 FR 1000555
(43) Date de publication de la demande: 19.12.2012
(73) Titulaire: Safran Aircraft Engines, 75015 Paris (FR)
(72) Inventeur: BOLETIS, Yannis, 77550 Moissy Cramayel Cedex (FR); CARDINAL, Jean-Louis, 77550 Moissy Cramayel Cedex (FR); DE SANCTIS, Serge, 77550 Moissy Cramayel Cedex (FR); TRAN, Julien, 77550 Moissy Cramayel Cedex (FR)
(74) Mandataire: Pichat, Thierry
(86) Numéro de dépôt international: PCT/FR2011/050182
(87) Numéro de publication internationale: WO 2011/098705

(56) Documents cités:
- EP-A1- 1 843 075
- EP-A1- 2 022 600
- EP-A2- 1 959 094
- EP-A2- 2 108 787
- WO-A1-2007/133198
- WO-A1-2010/007323
- JP-A- 10 183 087
- JP-A- 63 055 369
- US-A- 5 606 797

## Description

La présente invention concerne un procédé de réparation d'une bride annulaire d'un carter en aluminium, pour une turbomachine telle qu'un turboréacteur ou un turbopropulseur d'avion.

Lors du fonctionnement d'un turboréacteur par exemple, le carter est soumis à des vibrations pouvant engendrer, à terme, des dégradations. Un carter de compresseur basse pression par exemple comporte une bride servant notamment à la fixation d'équipements et comportant de nombreux trous de passage de vis.

Les sollicitations mécaniques au niveau de ces trous, provoquées par les vibrations du carter, génèrent des dégradations par matage de la surface interne des trous et de la surface plane de la bride contre laquelle est appliqué l'équipement ou le support d'équipement. On observe ainsi une usure localisée de la surface de la bride, dans la zone de contact entre la bride et l'équipement ou le support d'équipement, une augmentation du diamètre du trou et une ovalisation de la section de ce dernier.

Afin d'assurer le bon fonctionnement de la turbomachine, il est nécessaire, soit de réparer ces dégradations, soit de changer complètement le carter. Le coût moyen d'un carter neuf est de l'ordre de 170 000 dollars.

Le document EP 1 959 094 A2 divulgue un procédé de réparation de l'art antérieure et en particulier un procédé de réparation d'un carter d'une turbomachine comportant au moins un trou de passage d'une vis de fixation d'un équipement, qui comporte les étapes successives consistant à former un lamage dans le carter autour du trou de passage de la vis, placer une rondelle dans le lamage et fixer la rondelle sur le carter à l'aide d'une colle.

Afin de réparer de telles dégradations, il est connu d'apporter de la matière par soudure afin de reconstruire la géométrie d'origine des trous et de la surface de la bride contre laquelle vient s'appuyer l'équipement ou le support d'équipement.

Lorsque les carters sont réalisés en aluminium ou en matériau composite, et plus généralement en un matériau non soudable, un tel procédé ne peut pas être utilisé. A titre d'alternative, l'apport de matière est alors réalisé à l'aide d'une résine époxy chargée en fibres de verre. Cette technique est uniquement utilisée afin de restaurer la géométrie d'origine des trous mais ne peut pas être employée pour réparer la zone endommagée de la surface de la bride, contre laquelle est appliquée l'équipement. En effet, la résistance à la compression de cette résine n'est pas suffisante pour garantir une interface rigide avec les équipements assemblés sur la bride. En outre, lors du serrage de la vis, seule la partie saine de la bride est capable de supporter les efforts de compression. La surface d'appui saine étant réduite, la pression de matage et l'usure de la bride sont augmentées. Ainsi, même après réparation des trous, le carter devra être changé rapidement, du fait de l'usure trop importante de ladite surface de la bride.

De plus, une telle réparation ne peut être réalisée lors d'une opération de maintenance sous l'aile, mais nécessite au contraire la dépose complète du moteur.

Il est également à noter que la réglementation interdit le rajout d'une pièce supplémentaire par rapport à une configuration certifiée.

L'invention a notamment pour but d'apporter une solution simple, efficace et économique à ce problème.

A cet effet, elle propose un procédé de réparation d'une bride annulaire d'un carter en aluminium, pour une turbomachine telle qu'un turboréacteur ou un turbopropulseur d'avion, la bride comportant au moins un trou de passage d'une vis de fixation d'un équipement suivant les caractéristiques de la revendication 1.

Des mises en oeuvre préférés du procédé sont décrites dans les revendications dépendantes.

L'équipement ou le support d'équipement peut alors s'appuyer sur la rondelle, capable de supporter les efforts de compression lors du serrage de la vis, et permettant de centrer la vis par rapport au trou.

Comme la rondelle est solidaire du carter, elle n'est pas considérée comme une pièce supplémentaire distincte du carter, et respecte la réglementation.

Une telle réparation est peu coûteuse, rapide, et peut être réalisée directement lors d'une opération de maintenance sous l'aile.

En outre l'anodisation garantit l'adhérence de la colle.

Avantageusement, le procédé comporte une étape de contrôle par ressuage du lamage et/ou de la surface de la bride entourant le débouché du trou de passage de la vis, préalable à l'étape d'anodisation.

Selon une possibilité de l'invention, la rondelle est collée sur la bride à l'aide d'une résine époxy chargée en fibres de verre.

Une telle résine offre une bonne adhérence sur de l'aluminium anodisé et sur la rondelle, et ne provoque pas de corrosion du matériau de la bride.

Préférentiellement, la colle est appliquée au moins contre la surface de fond du lamage.

La surface de la bride autour du trou de passage de la vis peut être préparée au préalable par toilage, de façon à obtenir un bon état de surface.

On rappelle que le toilage est un procédé de finition simple et peu coûteux, consistant à aplanir la surface à l'aide d'une toile abrasive.

Selon l'invention la rondelle est réalisée en un matériau ayant une dureté supérieure à celle du matériau du carter, afin de mieux supporter les contraintes de matage au niveau de la zone de contact entre l'équipement ou le support d'équipement et la rondelle.

De préférence, le procédé comporte une étape de marquage d'une référence sur le carter, à proximité de la rondelle, de manière à assurer la traçabilité de la réparation lors des démontages ou inspections futures du carter.

De manière préférée, le diamètre externe de la rondelle est compris entre 10 et 15 mm, le diamètre interne de la rondelle étant de l'ordre de 7 mm.

Ces dimensions de la rondelle offrent ainsi un bon compromis entre la diminution des contraintes sur la face de bride et la tenue de la bride après réalisation du lamage. En effet, plus le diamètre de la rondelle est important, plus les contraintes précitées sont faibles, mais plus la bride est fragilisée par le lamage.

L'invention sera mieux comprise et d'autres détails, caractéristiques et avantages de l'invention apparaîtront à la lecture de la description suivante faite à titre d'exemple non limitatif en référence aux dessins annexés dans lesquels :
- la figure 1 est une vue en perspective d'une portion de bride endommagée,
- la figure 2 est une vue à plus grande échelle du trou de passage de la bride endommagée,

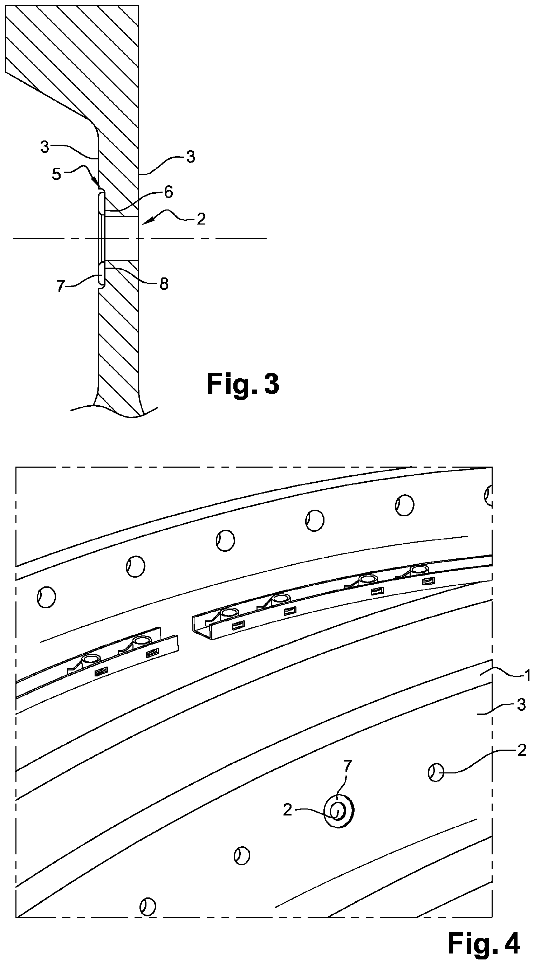

- la figure 3 est une vue en coupe axiale d'une portion de bride réparée par le procédé selon l'invention,
- la figure 4 est une vue partielle et en perspective de la bride de la figure 3.

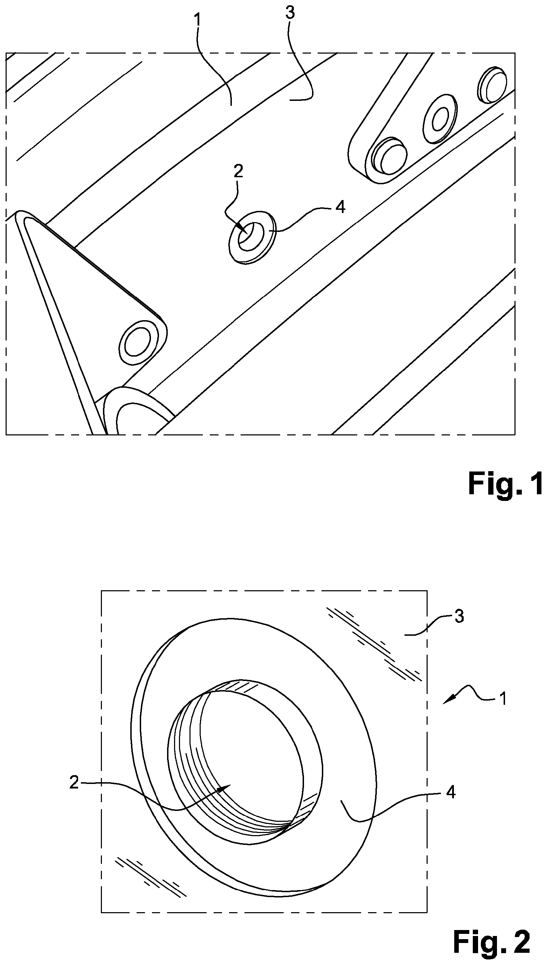

Les figures 1 et 2 montrent une bride annulaire 1 d'un carter en aluminium d'un compresseur basse pression d'un turboréacteur, endommagée par les sollicitations mécaniques générées lors du fonctionnement du turboréacteur.

La bride 1 comporte des trous 2 ménagés sur sa circonférence et régulièrement espacés les uns des autres, débouchant de part et d'autre sur des surfaces latérales annulaires 3. Les trous 2 servent au passage de vis, pour le boulonnage de raidisseurs ou d'équipements. Dans le cas des figures 1 et 2, l'équipement (non représenté) comporte une face de section circulaire qui, en condition d'utilisation, est en appui contre la face latérale 3 correspondante, autour du trou de passage 2 de la vis.

En fonctionnement, les vibrations du carter génèrent des dégradations 4 par matage de la surface interne des trous 2 et de la surface latérale 3 de la bride 1. On observe ainsi un enfoncement localisé de la surface 3 de la bride 1, dans la zone de contact entre la bride et l'équipement, une augmentation du diamètre du trou 2 et/ou une ovalisation de la section de ce trou 2. Toutes ces dégradations sont nettement visibles aux figures 1 et 2.

Afin de réparer la bride 1 de ce carter, dans un mode de réalisation, il est proposé un procédé comportant les étapes successives consistant à :
- préparer par toilage la surface 3 de la bride 1 autour du trou de passage 2 de la vis,
- former un lamage 5 dans la bride 1 autour du trou de passage 2 de la vis, le lamage 5 étant d'un diamètre légèrement supérieur au diamètre de la zone endommagée 4,
- contrôler par ressuage l'état de surface du lamage 5 et/ou de la surface latérale 3 de la bride 1 entourant le débouché du trou de passage 2 de la vis,
- anodiser la surface de fond 6 du lamage 5,
- placer une rondelle 7 dans le lamage 5,
- fixer la rondelle 6 sur la bride 1 à l'aide d'une résine époxy 8 chargée en fibres de verre,
- marquer une référence sur le carter, à proximité de la rondelle 7.

Plus particulièrement, la résine 8 est appliquée contre la surface de fond 6 du lamage 5. De préférence, la résine utilisée est celle commercialisée par la société HENKEL sous la référence Hysol EA9394.

En outre, la rondelle 7 est réalisée en un matériau ayant une dureté supérieure à celle du matériau du carter, par exemple en un alliage de type A286.

Le diamètre externe de la rondelle 7 est compris entre 10 et 15 mm, son diamètre interne est de l'ordre de 7 mm et son épaisseur est comprise entre 0,8 et 1,3 mm. Les dimensions de la rondelle 7 sont définies notamment en fonction de l'usure de la bride 1.

Dans le cas décrit ci-dessus, le carter est en aluminium. Bien entendu, le procédé selon l'invention est également applicable à des carters en matériau composite ou en acier. Dans ce cas toutefois, l'étape d'anodisation n'est pas nécessaire.

La rondelle 7 forme une portée rigide, solidaire du carter pour l'équipement ou le support d'équipement, et permet de centrer la vis par rapport au trou 2.

Le coût d'une telle réparation est de l'ordre de 70 dollars, ce qui est négligeable en comparaison au coût d'un remplacement du carter détérioré par un carter neuf.

En outre, comme indiqué précédemment, cette réparation peut être effectuée directement sous l'aile, la dépose du moteur n'étant pas nécessaire.

Il est également à noter que ce procédé permet d'utiliser, après réparation, des boulons identiques à ceux utilisés avant la réparation.

## Revendications

1. Procédé de réparation d'une bride annulaire (1) d'un carter en aluminium, pour une turbomachine telle qu'un turboréacteur ou un turbopropulseur d'avion, la bride (1) comportant au moins un trou de passage (2) d'une vis de fixation d'un équipement, **caractérisé en ce qu'**il comporte les étapes successives consistant à :
- former un lamage (5) dans la bride (1) autour du trou de passage (2) de la vis,
- anodiser la surface de fond (6) du lamage (5),
- placer une rondelle (7) dans le lamage (5), la rondelle (7) étant réalisée en un matériau ayant une dureté supérieure à celle du matériau du carter,
- fixer la rondelle (7) sur la bride (1) à l'aide d'une colle (8).

2. Procédé selon la revendication 1, **caractérisé en ce qu'**il comporte une étape de contrôle par ressuage du lamage (5) et/ou de la surface (3) de la bride (1) entourant le débouché du trou de passage (2) de la vis, préalable à l'étape d'anodisation.

3. Procédé selon la revendication 1 ou 2, **caractérisé en ce que** la rondelle (7) est collée sur la bride (1) à l'aide d'une résine époxy chargée en fibres de verre (8).

4. Procédé selon l'une des revendications 1 à 3, **caractérisé en ce que** la colle (8) est appliquée au moins contre la surface de fond (6) du lamage (5).

5. Procédé selon l'une des revendications 1 à 4, **caractérisé en ce que** la surface (3) de la bride (1) autour du trou de passage (2) de la vis est préparée au préalable par toilage.

6. Procédé selon l'une des revendications 1 à 5, **caractérisé en ce qu'**il comporte une étape de marquage d'une référence sur le carter, à proximité de la rondelle (7).

7. Procédé selon l'une des revendications 1 à 6, **caractérisé en ce que** le diamètre externe de la rondelle (7) est compris entre 10 et 15 mm, le diamètre interne de la rondelle étant de l'ordre de 7 mm.

## Patentansprüche

1. Verfahren zur Reparatur eines ringförmigen Flansches (1) eines Aluminiumgehäuses für ein Turbotriebwerk, wie etwa ein Turbostrahltriebwerk oder ein Turboprop-Triebwerk für Flugzeuge, wobei der Flansch (1) zumindest ein Durchgangsloch (2) für eine Befestigungsschraube zum Befestigen einer Einrichtung aufweist, **dadurch gekennzeichnet, dass** es die nachstehenden Schritte umfasst:
- Ausbilden einer Senke (5) in dem Flansch (1) um das Durchgangsloch (2) für die Schraube herum,
- Anodisieren der Bodenfläche (6) der Senke (5),
- Einsetzen einer Unterlegscheibe (7) in die Senke (5), wobei die Unterlegscheibe (7) aus einem Material mit höherer Härte als das Material des Gehäuses hergestellt ist,
- Befestigen der Unterlegscheibe (7) an den Flansch (1) mit Hilfe von Klebstoff (8).

2. Verfahren nach Anspruch 1, **dadurch gekennzeichnet, dass** es einen Schritt der Farbeindringprüfung der Senke (5) und/oder der Fläche (3) des Flansches (1), die die Mündung des Durchgangslochs (2) für die Schraube umgibt, umfasst, der vor dem Schritt des Anodisierens erfolgt.

3. Verfahren nach Anspruch 1 oder 2, **dadurch gekennzeichnet, dass** die Unterlegscheibe (7) mit Hilfe von einem mit Glasfasern (8) verstärkten Epoxidharz an den Flansch (1) angeklebt wird.

4. Verfahren nach einem der Ansprüche 1 bis 3, **dadurch gekennzeichnet, dass** der Klebstoff (8) zumindest an die Bodenfläche (6) der Senke (5) aufgebracht wird.

5. Verfahren nach einem der Ansprüche 1 bis 4, **dadurch gekennzeichnet, dass** die Fläche (3) des Flansches (1) um das Durchgangsloch (2) für die Schraube herum zuvor durch Bandschleifen vorbereitet wird.

6. Verfahren nach einem der Ansprüche 1 bis 5, **dadurch gekennzeichnet, dass** es einen Schritt des Markierens eines Bezugszeichens auf das Gehäuse in der Nähe der Unterlegscheibe (7) umfasst.

7. Verfahren nach einem der Ansprüche 1 bis 6, **dadurch gekennzeichnet, dass** der Außendurchmesser der Unterlegscheibe (7) zwischen 10 und 15 mm beträgt, wobei der Innendurchmesser der Unterlegscheibe in der Größenordnung von 7 mm liegt.

## Claims

1. A method of repairing a flange (1) of an aluminium casing, for a turbine engine such as an airplane turboprop or turbojet, the flange (1) including at least one through hole (2) for passing a bolt for fastening equipment, the method being **characterized in that** it comprises the successive steps consisting in:
• forming a spot face (5) in the flange (1) around the hole (2) for passing the bolt;
• anodizing the bottom surface (6) of the spot face (5) ;
• placing a washer (7) on the spot face (5), the washer (7) being made of a material that presents hardness greater than the hardness of the material of the casing;
• fastening the washer (7) to the flange (1) using adhesive (8).

2. A method according to claim 1, **characterized in that** it, prior to performing the anodizing step, the method includes a step of using dye penetration to inspect the spot face (5) and/or the surface (3) of the flange (1) surrounding the outlet of the hole (2) for passing the bolt.

3. A method according to claim 1 or claim 2, **characterized in that** the washer (7) is adhesively bonded to the flange (1) using a fiber glass-filled epoxy resin (8) .

4. A method according to any one of claims 1 to 3, **characterized in that** the adhesive (8) is applied at least against the bottom surface (6) of the spot face (5) .

5. A method according to any one of claims 1 to 4, **characterized in that** the surface (3) of the flange (1) around the hole (2) for passing the bolt is previously prepared by belt-grinding.

6. A method according to any one of claims 1 to 5, **characterized in that** it includes a step of marking a reference on the casing, in the proximity of the washer (7) .

7. A method according to any one of claims 1 to 6, **characterized in that** the outside diameter of the washer (7) lies in the range 10 mm to 15 mm, the inside diameter of the washer being about 7 mm.
